# EUROPEAN PATENT SPECIFICATION

(11) **EP 2 429 129 B1**
(45) Date of publication and mention of the grant of the patent: **05.07.2017**
(21) Application number: 09844296.5
(22) Date of filing: 15.12.2009
(51) Int. Cl.: H04L 12/28, H04L 29/06, H04L 12/437

(54) **METHOD FOR NETWORK PROTECTION AND ARCHITECTURE FOR NETWORK PROTECTION**
VERFAHREN ZUM NETZWERKSCHUTZ UND ARCHITEKTUR ZUM NETZWERKSCHUTZ
PROCÉDÉ DE PROTECTION DE RÉSEAU ET ARCHITECTURE DE PROTECTION DE RÉSEAU

(30) Priority: 08.05.2009 CN 200910083533
(43) Date of publication of application: 14.03.2012
(73) Proprietor: ZTE Corporation, Shenzhen, Guangdong 518057 (CN)
(72) Inventor: WU, Shaoyong, Guangdong 518057 (CN); SHAO, Hong, Guangdong 518057 (CN)
(74) Representative: Carangelo, Pierluigi
(86) International application number: PCT/CN2009/075594
(87) International publication number: WO 2010/127544

(56) References cited:
- EP-A1- 2 051 447
- WO-A1-2009/039697
- CN-A- 101 051 995
- CN-A- 101 072 237
- CN-A- 101 094 175
- US-A1- 2008 049 622

## Description

### Field of the Invention

The present invention relates to the field of network protection, and in particular to a network protection method and a network protection architecture.

### Background of the Invention

In various kinds of networks (such as Ethernet, layer 2 virtual private networks (L2VPN), etc.) based on frame forwarding, on one hand, due to the characteristics of frame broadcast, there cannot be more than one reachable communication path existing between two nodes in a network; therefore, if there are more than one reachable communication path existing between two nodes in the network, then the existing plurality of communication paths can form a closed loop. And since broadcast frames will be transmitted on the closed loop continuously, the traffic will become larger and larger and a great amount of bandwidth will be occupied, finally incurring the network storm, which causes the network unavailable. On the other hand, the network generally requires relatively high reliability. That is, a plurality of communication paths are set between two nodes in the network so as to achieve a redundancy backup between the master communication path and the standby communication path and achieve the objective of network protection. Thus, When both the master communication path and the standby communication path are intact, the data forwarding function of the standby communication path is blocked and the protected data of the network is transmitted on the master communication path; and when the master communication path is failed, the data forwarding function of the standby communication path is unblocked and the protected data of the network is switched to the standby communication path to transmit, thereby achieving switching of the network from the normal state to the failure state of the communication path, which improves the anti-failure capability of the network and achieves reliable running of the network.

At present, in the G.8032 standard proposed by the international telecommunication union (ITU-T), automatic protection switching protocol and mechanism are defined for the Ethernet layer of the ring topology Ethernet. This network protection method is suitable for the ring topology Ethernet, the implementation of which is as follows: in the ring topology Ethernet, a section of a link to be a ring protection link is selected, when all the links of the Ethernet ring are intact, at least one of two adjacent nodes of the ring protection link blocks a port which is connected to the ring protection link to prevent the protected data passing over the ring protection link. Therefore, there is only one communication path between any two nodes on the Ethernet ring; thus a closed loop of the communication path will not appear in the Ethernet ring, which prevents closed loop and network storm; while when a link of the Ethernet ring is failed, if this failed link is not the ring protection link, then a node of an adjacent port of the ring protection link is blocked and a blocked port on the ring protection link is unblocked, which enables the protected data to pass over the ring protection link, and a new communication path is generated between any two nodes on the ring protection link, thus ensuring the re-connection of communication path and improving network reliability.

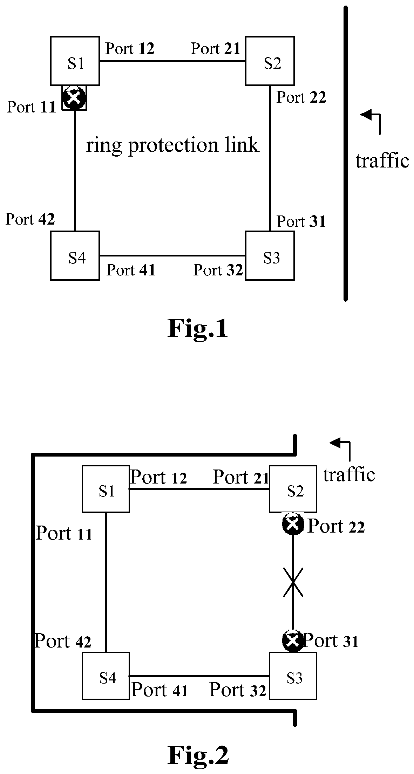

Fig. 1 is a schematic diagram of the currently available Ethernet ring protection based on the G8032. As shown in Fig. 1, nodes S1, S2, S3, and S4 form an Ethernet ring, the link between the nodes S1 and the S4 is a ring protection link, the node S1 is a node to which the ring protection link belongs, and the node S1 blocks or unblocks the ring protection link by blocking and unblocking of a control port 11, the blocking indicating that the blocked node cannot finish the forwarding function. When the links of the Ethernet ring in Fig. 1 are intact, the node S1 blocks the port 11 to prevent the protected data passing over the ring protection link, i.e. forwarded by the node S1, and the protected data traffic communication path between the nodes S2 and S3 merely is S2<->S3, and it cannot be S2<->S1<->S4<->S3. Therefore, closed loop of communication path will not appear in the ring network and the network storm is prevented.

Fig. 2 is a schematic diagram of the Ethernet ring protection when a link is failed in Fig. 1. As shown in Fig. 2, assuming the nodes S2 and the S3 detect link failure, first, the nodes S2 and the S3 block the ports 22 and 31 designated by the protection switching request respectively, and send a link failure alert protocol frame to inform other nodes to perform protection switching; and after receiving the link failure alert protocol frame, the node S1 to which the ring protection link belongs unblocks the blocked port 11 which is connected to the ring protection link, and each node on the Ethernet ring refreshes the address forwarding table to achieve network protection switching. After performing the protection switching, the protected data can pass over the unblocked ring protection link and cannot pass over the failed link. As shown in Fig. 2, the protected data traffic between nodes is transmitted on a new communication path, and the protected data traffic communication path between the nodes S2 and S3 is S2<->S1<->S4<->S3. Here, link failure is one of the situations which lead to protection switching, and it further comprises the situations such as manual switching, forced switching, etc.; there is a dedicated module which will send a protection switching request to other nodes after the protection switching is caused; failure detection and the practical implementation of the generation of protection switching request belong to a technology well known by those skilled in the art, which will not be described here redundantly.

The above method for Ethernet ring protection based on the G8032 is generally only suitable for specific topologies, such as ring topology, etc., and the protection protocol needs to be implemented on each node of this topology. Currently, the method for achieving network protection is greatly limited and is not suitable for some network protections with flexible topologies.

EP2051447A1 discloses a method, device and system for ring protection.

### Summary of the Invention

In the view of this situation, the main objective of the present invention is to provide a network protection method, the method can be applied in the networks with various kinds of topologies flexibly, improving the anti-failure capability of the network, and achieving the reliable running of the network.

Another objective of the present invention is to provide a network protection architecture, the architecture can be applied in the networks with various kinds of topologies flexibly, improving the anti-failure capability of the network, and achieving the reliable running of the network.

In order to achieve the above objectives, the technical solution of the present invention is achieved as follows:
A network protection method is first provided according to one aspect of the present invention.

The method for network protection according to the present invention in particular can comprise the following steps: setting up a protection characteristic set for a local network which is determined to be protected, and setting up a link from the protected links in the protection characteristic set as a protection link; judging whether there exists a protection switching request, and a node to which the protection link belongs blocking a port connected to the protection link if there does not exist a protection switching request; and a node of the protection switching request blocking a port designated by the protection switching request, the node of the protection switching request sending a switching protocol frame to a node to which the protection link belongs via a protocol channel of the protection protocol, and the node to which the protection link belongs unblocking a port which is connected to the protection link after receiving the switching protocol frame if there exists a protection switching request, wherein the protection characteristic set at least comprises characteristics of the protected links.

In particular, the local network is determined in a network according to practical situations; and the local network is one or more; the nodes and links in the local network form a physical or logical ring topology, or a link topology, or a ring and link combined topology.

In particular, the protection characteristic set at least comprises the characteristics of a node connected to the protected link, and protected data.

In particular, the step of setting up a protection link comprises: selecting a link with little traffic from the protected links as a protection link according to the real traffic of each protected link, and selecting any node connected to the protection link as a node to which the protection link belongs.

In particular, the step of the node of the protection switching request blocking a port designated by the protection switching request, and the node to which the protection link belongs unblocking a port connected to the protection link is: the node of the protection switching request receiving a protection switching request, and the node to which the protection link belongs unblocking a port connected to the protection link, and the node of the protection switching request blocking a port designated by the protection switching request.

In particular, the protection characteristic set further comprises: a protocol channel of a protection protocol for a sending path of a protocol frame for indicating there is a protection switching request.

In particular, the protection switching request comprises link failure, manual switching, and forced switching; and setting priority for different types of protection switching requests, and the protection switching request which is judged to be existed is a protection switching request with the highest priority.

A network protection architecture is further provided according to another aspect of the present invention.

The network protection architecture according to the present invention in the network comprises: a local network which is determined to be protected, with the determined local network at least comprising a protected link, a node connected to the protected link, and a protection link; when there exists a protection switching request in the network, a node of the protection switching request blocks a port designated by the protection switching request, the node of the protection switching request sends a switching protocol frame to a node to which the protection link belongs via a protocol channel of the protection protocol, and the node to which the protection link belongs unblocks a port connected to the protection link after receiving the switching protocol frame; and when there does not exist protection switching request, then a node to which the protection link belongs blocks a port connected to the protection link.

In particular, the determined local network in the network is one or more.

In particular, the nodes and links in the local network forms a physical or logical ring topology, or link topology, or ring and link combined topology.

It can be seen from the technical solution provided by the present invention: in a network, one or more protected local networks are determined according to actual conditions, and a protection characteristic set of each local network is set; a link in protected links of the protection characteristic set is set as a protection link, and whether a protection switching request exists is judged, if the protection switching request does not exist, a node to which the protection link belongs blocks a port connected with the protection link; and if the protection switching request exists, a node of the protection switching request blocks a designated port of the protection switching request, and the node to which the protection link belongs unblocks the port connected with the protection link. The scheme of the invention is applicable to networks of various topologies, improves the fault-resistant capacity of the network, and realizes reliable operation of the network. Furthermore, when a protocol channel of a protection protocol for a transmit path of a protocol frame indicating the existence of the protection switching request is set in the protection characteristic set, the protection protocol is prevented from being implemented on each node, and conveniences are brought to realize the network protection.

Other features and advantages of the present invention will be described in the following description and partly become obvious from the description, or be understood by implementing the present invention. The objectives and other advantages of the present invention can be realized and obtained through the structures specially indicated by the description, claims and drawings.

### Brief Description of the Drawings

The drawings herein are used to provide a further understanding of the present invention and form a part of the specification, which are used to explain the present invention together with the embodiments of the present invention without unduly limiting the scope of the present invention. In the drawings:
Fig. 1 is a schematic diagram of the currently available Ethernet ring protection based on the G.8032 protocol;
Fig. 2 is a schematic diagram of Ethernet ring protection after a link failure occurs in Fig. 1;
Fig. 3 is a flowchart of a method for achieving network protection of the present invention;
Fig. 4 is a schematic diagram of a network architecture for achieving network protection in embodiment 1 of the present invention;
Fig. 5 is a schematic diagram of a network architecture when link failure occurs in embodiment 1 of the present invention;
Fig. 6 is a schematic diagram of a network architecture for achieving network protection in embodiment 2 of the present invention; and
Fig. 7 is a schematic diagram of another network architecture for achieving network protection in embodiment 2 of the present invention.

### Detailed Description of Embodiments

### Functional Overview

In the embodiments of the present invention, first, a set of protection characteristics of a local network determined to be protected is set up, and one of the protected links in the protection characteristic set is set up as a protection link; then it is determined whether there is a protection switching request, and if there is no protection switching request, a node to which the protection link belongs blocks ports connected with the protection link; and if there is a protection switching request, a node of the protection switching request blocks ports designated by the protection switching request, and the node to which the protection link belongs unblocks the ports connected with the protection link. Thus, it is convenient to achieve network protection.

For better understanding of the present invention, the network protection method and network protection architecture will be described in detail in conjunction with the drawings and particular embodiments hereinafter. It should be understood that the preferred embodiments described herein only serve to describe and explain the present invention and are not intended to limit the present invention.

It needs to note that the embodiments of the present invention and the features in the embodiments can be combined with each other if there is no conflict.

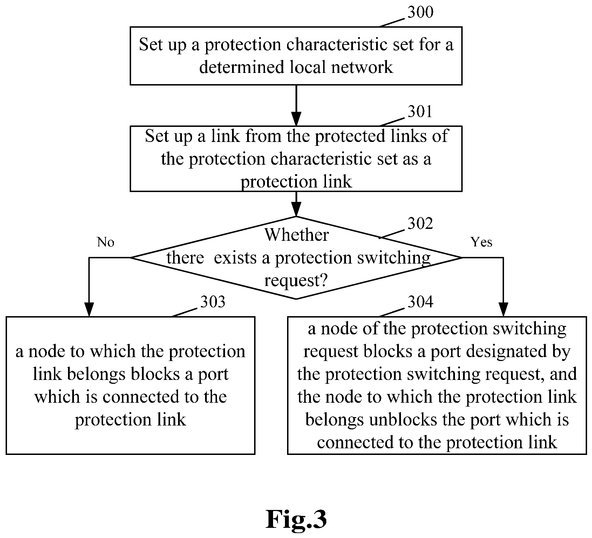

A network protection method is first provided according to the embodiments of the present invention. Fig. 3 is a flowchart of a method for achieving network protection of the present invention. And as shown in Fig. 3, the network protection method according to the embodiments of the present invention can comprises the following steps (steps 300 to 304):
Step 300: a protection characteristic set for a determined local network is set.

The local network is a protected network and is determined according to the practical situations of the network in advance. For example, some especially fragile or very important rings or sections can be set as a local network. The nodes and links in the local network form a physical or logical ring topology, or a link topology, or a ring and link combined topology. The local network is one or more.

The protection characteristic set at least comprises the characteristics of the protected link, the node which is connected to the protected link, the protected data, etc. It can further comprise a protocol channel of a protection protocol for the sending path of a protocol frame indicating there is a protection switching request and so on. It can further comprise

Step 301: a link in the protected links of the protection characteristic set is set as a protection link.

The detailed implementation of this step comprises: selecting a link with little traffic from the protected links as a protection link according to the actual traffic of each protected link, and selecting any node which is connected to the protection link as a node to which the protection link belongs. The node to which the protection link belongs blocks or unblocks the protection link by controlling the blocking and unblocking of a port which is connected to the protection link and the node. Here, the link with little traffic refers to a link which enables the number of the hops of the local network to be minimum according to a traffic model, and of course it can also be a link which enables the number of the hops of the local network to be relatively less, only if it can serve the function of link protection.

Step 302: whether there is a protection switching request is judged. If the judgment is yes, then proceed to Step 304; otherwise, proceed to Step 303.

In this step, the generation of protection switching request belongs to the prior art, and its detailed implementation is irrelevant to the present invention. Therefore, it will not be described herein redundantly. The protection switching request can be link failure, manual switching, forced switching and other types. The protection switching request will be sent to the port of the node of the protection switching request, and the port of the node of the protection switching request receiving this request indicates that there exists a protection switching request.

Furthermore, priorities are set to different types of protection switching requests. For example, the priority of link failure can be set to be the highest, the priority of manual switching is the second, and the priority of forced switching is the lowest. The protection switching requests are processed according to their priorities from high to low.

Step 303: the node to which the protection link belongs blocks the port which is connected to the protection link. This procedure is ended.

If there is no protection switching request, then the node to which the protection link belongs blocks the port which is connected to the protection link, which prevents the data traffic which conforms to the characteristics of the protected data from passing the protection link.

Step 304: the node of the protection switching request blocks the port designated by the protection switching request and the node to which the protection link belongs unblocks the port which is connected to the protection link.

The node of the protection switching request receives the protection switching request and informs the node to which the protection link belongs through a switching protocol frame, and the node to which the protection link belongs unblocks the port which is connected to the protection link, so that the data traffic which conforms with the characteristics of the protected data in the protection characteristic set can pass this protection link. The node of the protection switching request blocks the port designated by the protection switching request.

Furthermore, a protocol channel of a protection protocol for a transmit path of a protocol frame indicating the existence of the protection switching request is set up in the protection characteristic set, and the node of the protection switching request sends a switching protocol frame to the node to which the protection link belongs through the protocol channel of the protection protocol. Thus, the protection protocol is prevented from being implemented on each node, and conveniences are brought to realize the network protection.

A network protection architecture is further provided according to the embodiments of the present invention, and in the network, it comprises: a determined protected local network, with the above determined protected local network (s) at least comprising a protected link, a node connected to the protected link and a protection link; when there exists a protection switching request in the network, a node of the protection switching request blocks a port designated by the protection switching request, and a node to which the protection link belongs unblocks a port which is connected to the protection link; and when there does not exist a protection switching request, the node to which the protection link belongs blocks the port which is connected to the protection link.

During the detailed implementation, one or more local networks can be set up in the network.

In particular, the nodes and links in the local network form a physical or logical ring topology, or a link topology, or a ring and link combined topology. Any node which is connected to the protection link is a node to which the protection link belongs.

The present invention will now be described in detail in conjunction with several embodiments hereinafter.

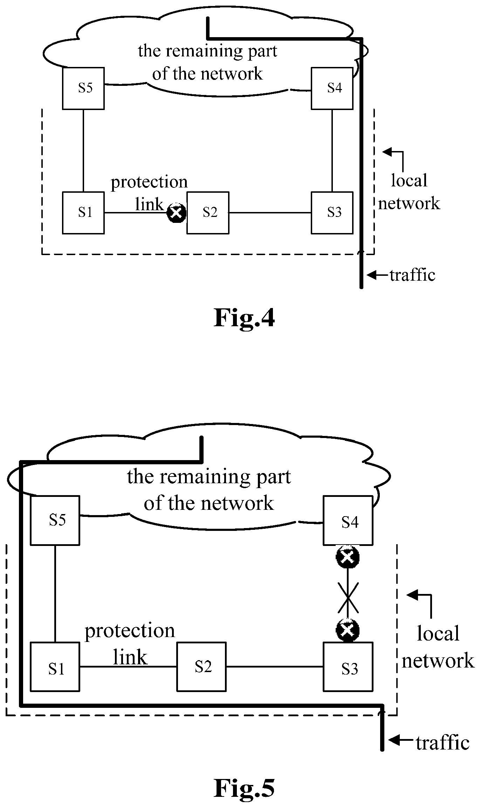

Fig. 4 is a schematic diagram of a network architecture for achieving network protection in embodiment 1 of the present invention. And as shown in Fig. 4, in embodiment 1, the protected local network is selected to be a link topology network in the network, and a protection characteristic set of this local network is set up: the protected links are S5<->S1, S1<->S2, S2<->S3, and S3<->S4, and the nodes which are connected to the protected links are S1, S2, S3, S4, and S5, the characteristics of the protected data is Ethernet data, and assuming it is the Ethernet data of the virtual local networks with their numbers being between 100 and 200. In this embodiment 1, assume that the protection characteristic set further comprises a protocol channel of the protection protocol, and assume that the number of the virtual local network is 4001. Assume that the protection link is a link between the nodes S1 and S2 and the node S2 is selected to be a node to which the protection link belongs.

If the nodes in the protected local network have not received a protection switching request, then as shown in Fig. 4, the node S2 to which the protection link belongs blocks a port which is connected to the protection link, and the communication path between the node S3 and the remaining part of the network is: S3<->S4<->nodes in the remaining part of the network.

If the nodes in the protected local network receive a protection switching request, Fig. 5 is a schematic diagram of a network architecture when link failure occurs in embodiment 1 of the present invention. In embodiment 1, assuming there is a link failure with the highest priority existing between the nodes S3 and S4, then the node S3 or the S4 sends a switching protocol frame to the node S2 to which the protection link belongs through the protocol channel of the protection protocol. And as shown in Fig. 5, the nodes S4 and S5 which are connected to the failed link block a port designated by the protection switching request, and the node S2 to which the protection link belongs unblocks the port which is connected to the protection link. Thus, the communication path between the node S3 and the remaining part of the network is: S3<->S2<->S1<->S5<-> nodes in the remaining part of the network.

When switching protocol frames are communicated among nodes, there can be two paths. Take there is link failure between the nodes S3 and S4 in embodiment 1 as an example. The switching protocol frames to be sent into the local network by the nodes S3 and S4 can be transmitted to the node S2 to which the protection link belongs via the path of S3->S2; and can also be transmitted to the node S2 to which the protection link belongs via the path of S4->the remaining part of the network->S5->S1->S2. If the switching protocol frames of the local network cannot be transmitted through the remaining part of the network, then they can only be transmitted through the links in the local network. That is, they are transmitted via the path of S3->S2 in this embodiment 1.

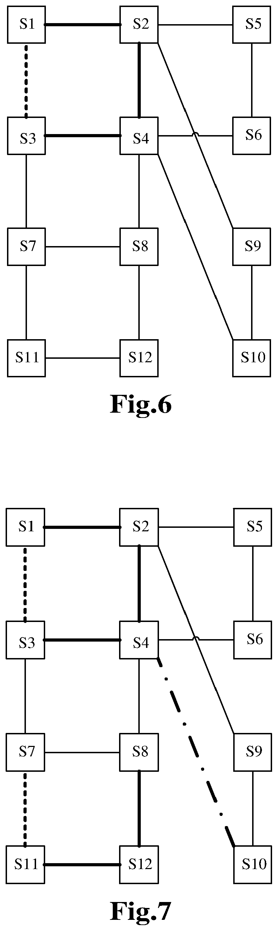

Fig. 6 is a schematic diagram of a network architecture for achieving network protection in embodiment 2 of the present invention. And as shown in Fig. 6, it is a complicated topology network, and adopting the method of the present invention, the ring topology network is used to be a local network (as shown by the bold lines in Fig. 6) in this complicated topology network and a protection characteristic set of this local network is set up: the protected links are S1<->S2, S2<->S4, S4<->S3 and S3<->S1; the nodes which are connected to the protected links are S1, S2, S3, and S4; the protection link is the link (as shown by the bold dash lines in Fig. 6) between the nodes S1 and S3; and the node S3 is selected as a node to which the protection link belongs.

Fig. 7 is a schematic diagram of another network architecture for achieving network protection in embodiment 2 of the present invention. And in the complicated topology network shown in Fig. 6, as shown in Fig. 7, the ring topology network and link topology network is used to be two local networks (as shown by the bold lines in Fig. 7) in this complicated topology network and a protection characteristic set of this local network for the link topology network is set: the protected links are S7<->S11, S11<->S12 and S12<->S8; nodes which are connected to the protected links are S7, S11, S12, and S8; the protection link is the link (as shown by the bold dash line in Fig. 7) between the nodes S7 and S11; and select the node S11 as a node to which the protection link belongs.

As to the ring topology network, as shown in Fig. 7, a protection characteristic set of this local network is set: the protected links are S1<->S2, S2<->S4, S4<->S3, and S3<->S1; nodes which are connected to the protected links are nodes S1, S2, S3, andS4; the protection link is the link (as shown by the heavy dash lines in Fig. 6) between the nodes S1 and S3; and the node S3 is selected to be a node to which the protection link belongs.

In addition, a protected link S4<->S10 and so on can be added into the ring topology network to form a local network and so on consisting of a ring topology network and a link topology network.

In summary, it can seen from the embodiments of the present invention that the network protection method and network protection architecture according to the embodiments of the present invention are suitable for networks with various kinds of topologies, which improves the anti-failure capability of the networks and achieves the reliable running of the networks; and setting up a protocol channel of the protection protocol for the sending path of a protocol frame indicating there is a protection switching request in the protection characteristic set avoids implementing protection protocol on each node, which brings convenience to the implementation of network protection.

It should be understood that those skilled in the art can make improvements or changes according to the description of the above solution, for example, the method for segmentation refining by using other user attributes, and all these improvements and changes belong to the protection scope of the affixed claims of the present invention. Above description is only to illustrate the preferred embodiments but not to limit the scope of the protection of the present invention.

## Claims

1. A network protection method, **characterized in that** the method comprises the following steps:
setting up a protection characteristic set for a local network which is determined to be protected(300), and setting up a link from protected links in the protection characteristic set as a protection link (301);
judging whether there exists a protection switching request(302), and a node to which the protection link belongs blocking a port connected to the protection link if there does not exist a protection switching request(303); and
a node of the protection switching request blocking a port designated by the protection switching request, and the node to which the protection link belongs unblocking a port which is connected to the protection link after receiving the switching protocol frame if there exists a protection switching request;
wherein the protection characteristic set at least comprises characteristics of the protected links, the node connected to the protected link, and protected data;
wherein the step of setting up a protection link comprises: selecting a link with little traffic from the protected links as a protection link according to the real traffic of each protected link, and selecting any node connected to the protection link as a node to which the protection link belongs.

2. The network protection method according to Claim 1, **characterized in that** the local network is determined in a network according to practical situations, and the local network is one or more; and
nodes and links in the local network form a physical or logical ring topology, or a link topology, or a ring and link combined topology.

3. The network protection method according to Claim 1, **characterized in that** the step of the node of the protection switching request blocking the port designated by the protection switching request and the node to which the protection link belongs unblocking the port connected to the protection link is:
the node of the protection switching request receiving a protection switching request, and informing the node to which the protection link belongs by a switching protocol frame; and
the node to which the protection link belongs unblocking the port connected to the protection link, and the node of the protection switching request blocking the port designated by the protection switching request.

4. The network protection method according to Claim 3, **characterized in that** the protection characteristic set further comprises: a protocol channel of a protection protocol for a sending path of a protocol frame indicating there is a protection switching request.

5. The network protection method according to Claim 1, **characterized in that** the protection switching request comprises link failure, manual switching, and forced switching; and
setting priority for different types of protection switching requests, and the protection switching request which is judged to be existed is a protection switching request with the highest priority.

6. A network protection architecture, **characterized in that** in a network comprises a local network which is determined to be protected, with the determined local network at least comprising a protected link, a node connected to the protected link, and a protection link;
a protection characteristic set is set up for the local network which is determined to be protected, and a link is set up from protected links in the protection characteristic set as a protection link, wherein the protection characteristic set at least comprises characteristics of the protected links, the node connected to the protected link, and protected data;
wherein the step of setting up a protection link comprises: selecting a link with little traffic from the protected links as a protection link according to the real traffic of each protected link, and selecting any node connected to the protection link as a node to which the protection link belongs;
when there exists a protection switching request in the network, a node of the protection switching request blocks a port designated by the protection switching request, the node of the protection switching request sends a switching protocol frame to a node to which the protection link belongs via a protocol channel of the protection protocol, and the node to which the protection link belongs unblocks a port connected to the protection link after receiving the switching protocol frame; and
when there does not exist protection switching request, then a node to which the protection link belongs blocks a port connected to the protection link.

7. The network protection architecture according to Claim 6, **characterized in that** the determined local network in the network is one or more.

8. The network protection architecture according to Claim 6, **characterized in that** the nodes and links in the local network form a physical or logical ring topology, or a link topology, or a ring and link combined topology.

## Patentansprüche

1. Ein Netzschutzverfahren, **dadurch gekennzeichnet, dass** das Verfahren folgende Schritte aufweist:
Aufbauen eines Schutzcharakteristiksatzes für ein lokales Netz, das geschützt werden soll (300), und Aufbauen einer Verbindung von geschützten Verbindungen in dem Schutzcharakteristiksatz als eine Schutzverbindung (301);
Beurteilen, ob eine Schutzumschaltanfrage vorliegt (302), und ein Knoten, zu dem die Schutzverbindung gehört, sperrt ein Tor, das mit der Schutzverbindung verbunden ist, wenn keine Schutzumschaltanfrage vorliegt (303); und
ein Knoten der Schutzumschaltanfrage sperrt ein Tor, das durch die Schutzumschaltanfrage angegeben wird, und der Knoten, zu dem die Schutzverbindung gehört, entsperrt ein Tor, das mit der Schutzverbindung verbunden ist, nachdem der Umschaltprotokollrahmen empfangen wird, wenn eine Schutzumschaltanfrage vorliegt;
wobei der Schutzcharakteristiksatz zumindest Charakteristika der geschützten Verbindungen, den Knoten, der mit der geschützten Verbindung verbunden ist, und geschützte Daten aufweist;
wobei der Schritt des Aufbauens einer Schutzverbindung ein Auswählen einer Verbindung mit wenig Verkehr aus den geschützten Verbindungen als eine Schutzverbindung gemäß dem realen Verkehr jeder geschützten Verbindung und Auswählen eines beliebigen Knotens, der mit der Schutzverbindung verbunden ist, als Knoten, zu dem die Schutzverbindung gehört, aufweist.

2. Das Netzschutzverfahren gemäß Anspruch 1, das **dadurch gekennzeichnet ist, dass** das lokale Netz in einem Netz gemäß praktischen Situationen bestimmt wird und das lokale Netz eines oder mehrere ist; und Knoten und Verbindungen in dem lokalen Netz eine physische oder logische Ringtopologie oder eine Verbindungstopologie oder eine kombinierte Ring- und Verbindungstopologie bilden.

3. Das Netzschutzverfahren gemäß Anspruch 1, das **dadurch gekennzeichnet ist, dass** der Schritt, bei dem der Knoten der Schutzumschaltanfrage das Tor sperrt, das durch die Schutzumschaltanfrage angegeben wird, und der Knoten, zu dem die Schutzverbindung gehört, das Tor, das mit der Schutzverbindung verbunden ist, entsperrt, wie folgt ist:
der Knoten der Schutzumschaltanfrage empfängt eine Schutzumschaltanfrage und informiert den Knoten, zu dem die Schutzverbindung gehört, durch einen Umschaltprotokollrahmen; und
der Knoten, zu dem die Schutzverbindung gehört, entsperrt das Tor, das mit der Schutzverbindung verbunden ist, und der Knoten der Schutzumschaltanfrage sperrt das Tor, das durch die Schutzumschaltanfrage angegeben wird.

4. Das Netzschutzverfahren gemäß Anspruch 3, das **dadurch gekennzeichnet ist, dass** der Schutzcharakteristiksatz ferner einen Protokollkanal eines Schutzprotokolls für einen Sendeweg eines Protokollrahmens, der anzeigt, dass eine Schutzumschaltanfrage vorliegt, aufweist.

5. Das Netzschutzverfahren gemäß Anspruch 1, das **dadurch gekennzeichnet ist, dass** die Schutzumschaltanfrage einen Verbindungsfehler, ein manuelles Umschalten und ein erzwungenes Umschalten aufweist; und
Setzen einer Priorität für unterschiedliche Typen von Schutzumschaltanfragen, und die Schutzumschaltanfrage, die als existent beurteilt wird, eine Schutzumschaltanfrage mit der höchsten Priorität ist.

6. Eine Netzschutzarchitektur, die **dadurch gekennzeichnet ist, dass** in einem Netz ein lokales Netz, das geschützt werden soll, vorliegt, wobei das bestimmte lokale Netz zumindest eine geschützte Verbindung, einen Knoten, der mit der geschützten Verbindung verbunden ist, und eine Schutzverbindung aufweist;
ein Schutzcharakteristiksatz für das lokale Netz aufgebaut wird, das geschützt werden soll, und eine Verbindung aus geschützten Verbindungen in dem Schutzcharakteristiksatz als eine Schutzverbindung aufgebaut wird, wobei der Schutzcharakteristiksatz zumindest Charakteristika der geschützten Verbindungen, den Knoten, der mit der geschützten Verbindung verbunden ist, und geschützte Daten aufweist;
wobei der Schritt des Aufbauens einer Schutzverbindung ein Auswählen einer Verbindung mit wenig Verkehr aus den geschützten Verbindungen als eine Schutzverbindung gemäß dem realen Verkehr jeder geschützten Verbindung und Auswählen eines beliebigen Knotens, der mit der Schutzverbindung verbunden ist, als Knoten, zu dem die Schutzverbindung gehört, aufweist;
wenn eine Schutzumschaltanfrage in dem Netz vorliegt, ein Knoten der Schutzumschaltanfrage ein Tor sperrt, das durch die Schutzumschaltanfrage angegeben wird, der Knoten der Schutzumschaltanfrage einen Umschaltprotokollrahmen an einen Knoten, zu dem die Schutzverbindung gehört, über einen Protokollkanal des Schutzprotokolls sendet, und der Knoten, zu dem die Schutzverbindung gehört, ein Tor, das mit der Schutzverbindung verbunden ist, nach einem Empfangen des Umschaltprotokollrahmens entsperrt; und
wenn keine Schutzumschaltanfrage vorliegt, ein Knoten, zu dem die Schutzverbindung gehört, ein Tor sperrt, das mit der Schutzverbindung verbunden ist.

7. Die Netzschutzarchitektur gemäß Anspruch 6, die **dadurch gekennzeichnet ist, dass** das bestimmte lokale Netz in dem Netz eines oder mehrere ist.

8. Die Netzschutzarchitektur gemäß Anspruch 6, die **dadurch gekennzeichnet ist, dass** die Knoten und Verbindungen in dem lokalen Netz eine physische oder logische Ringtopologie oder eine Verbindungstopologie oder eine kombinierte Ring- und Verbindungstopologie bilden.

## Revendications

1. Procédé de protection de réseau, **caractérisé en ce que** le procédé comprend les étapes suivantes :
la mise en place d'un ensemble de caractéristiques de protection pour un réseau local qui est déterminé comme étant protégé (300) et la mise en place d'une liaison parmi des liaisons protégées dans l'ensemble de caractéristiques de protection comme une liaison de protection (301) ;
le jugement du fait qu'il existe une demande de commutation de protection (302) et le blocage, par un noeud auquel la liaison de protection appartient, d'un port connecté à la liaison de protection s'il n'existe pas une demande de commutation de protection (303) ; et
le blocage, par un noeud de la demande de commutation de protection, d'un port désigné par la demande de commutation de protection et le déblocage, par le noeud auquel la liaison de protection appartient, d'un port qui est connecté à la liaison de protection après la réception de la trame de protocole de commutation s'il existe une demande de commutation de protection ;
dans lequel l'ensemble de caractéristiques de protection comprend au moins des caractéristiques des liaisons de protection, du noeud connecté à la liaison protégée et de données protégées ;
dans lequel l'étape de mise en place d'une liaison de protection comprend : la sélection d'une liaison avec un faible trafic parmi les liaisons protégées comme une liaison de protection en fonction du trafic réel de chaque liaison protégée, et la sélection d'un quelconque noeud connecté à la liaison de protection comme un noeud auquel la liaison de protection appartient.

2. Procédé de protection de réseau selon la revendication 1, **caractérisé en ce que** le réseau local est déterminé dans un réseau en fonction de situations pratiques et le réseau local est un ou plus ; et
des noeuds et des liaisons dans le réseau local forment une topologie en anneau physique ou logique ou une topologie de mailles ou une topologie combinée d'anneau et de mailles.

3. Procédé de protection de réseau selon la revendication 1, **caractérisé en ce que** l'étape de blocage, par le noeud de la demande de commutation de protection, du port désigné par la demande de commutation de protection et le déblocage, par le noeud auquel la liaison de protection appartient, du port connecté à la liaison de protection est :
la réception, par le noeud de la demande de commutation de protection, d'une demande de commutation de protection et l'information du noeud auquel la liaison de protection appartient par une trame de protocole de commutation ; et
le déblocage, par le noeud auquel la liaison de protection appartient, du port connecté à la liaison de protection et le blocage, par le noeud de la demande de commutation de protection, du port désigné par la demande de commutation de protection.

4. Procédé de protection de réseau selon la revendication 3, **caractérisé en ce que** l'ensemble de caractéristiques de protection comprend en outre : un canal de protocole d'un protocole de protection pour un chemin d'envoi d'une trame de protocole indiquant qu'il existe une demande de commutation de protection.

5. Procédé de protection de réseau selon la revendication 1, **caractérisé en ce que** la demande de commutation de protection comprend une défaillance de liaison, une commutation manuelle et une commutation forcée ; et
l'établissement d'une priorité pour différents types de demandes de commutation de protection, et la demande de commutation de protection qui est jugée comme ayant existé est une demande de commutation de protection avec la priorité la plus élevée.

6. Architecture de protection de réseau, **caractérisée en ce qu'**un réseau comprend un réseau local qui est déterminé comme étant protégé, avec le réseau local déterminé comprenant au moins une liaison protégée, un noeud connecté à la liaison protégée et une liaison de protection ;
un ensemble de caractéristiques de protection est mis en place pour le réseau local qui est déterminé comme étant protégé, et une liaison est mise en place à partir de liaisons protégées dans l'ensemble de caractéristiques de protection comme une liaison de protection, dans laquelle l'ensemble de caractéristiques de protection comprend au moins des caractéristiques des liaisons protégées, du noeud connecté à la liaison protégée et de données protégées ;
dans laquelle l'étape de mise en place d'une liaison de protection comprend : la sélection d'une liaison avec un faible trafic parmi les liaisons protégées comme une liaison de protection en fonction du trafic réel de chaque liaison protégée, et la sélection d'un quelconque noeud connecté à la liaison de protection comme un noeud auquel la liaison de protection appartient ;
quand il existe une demande de commutation de protection dans le réseau, un noeud de la demande de commutation de protection bloque un port désigné par la demande de commutation de protection, le noeud de la demande de commutation de protection envoie une trame de protocole de commutation à un noeud auquel la liaison de protection appartient par le biais d'un canal de protocole du protocole de protection, et le noeud auquel la liaison de protection appartient débloque un port connecté à la liaison de protection après la réception de la trame de protocole de commutation ; et
quand il n'existe pas de demande de commutation de protection, alors un noeud auquel la liaison de protection appartient bloque un port connecté à la liaison de protection.

7. Architecture de protection de réseau selon la revendication 6, **caractérisée en ce que** le réseau local déterminé dans le réseau est un ou plus.

8. Architecture de protection de réseau selon la revendication 6, **caractérisée en ce que** les noeuds et les liaisons dans le réseau local forment une topologie en anneau physique ou logique ou une topologie de mailles ou une topologie combinée d'anneau et de mailles.
